# EUROPEAN PATENT SPECIFICATION

(11) **EP 1 970 546 B1**
(45) Date of publication and mention of the grant of the patent: **20.01.2010**
(21) Application number: 08004705.3
(22) Date of filing: 13.03.2008
(51) Int. Cl.: F01N 3/22, F01N 3/28

(54) **Exhaust system and method of controlling an engine of a straddle type vehicle**
Abgassystem und Verfahren zur Steuerung eines Motors eines Zweiradfahrzeugs
Système d'échappement et procédé de contrôle du moteur d'un véhicule de type à enfourcher

(30) Priority: 13.03.2007 JP 2007064178; 13.03.2007 JP 2007064179
(43) Date of publication of application: 17.09.2008
(73) Proprietor: Yamaha Hatsudoki Kabushiki Kaisha, Iwata-shi, Shizuoka 438-8501 (JP)
(72) Inventor: Nishimura, Hidehiro, Iwata-shi Shizuoka-ken 438-8501 (JP); Takii, Osamu, Iwata-shi Shizuoka-ken 438-8501 (JP)
(74) Representative: Grünecker, Kinkeldey, Stockmair & Schwanhäusser Anwaltssozietät

(56) References cited:
- EP-A- 1 640 581
- JP-A- 2005 264 895
- US-A- 5 285 639
- US-A- 5 410 872
- US-A1- 2006 101 813

## Description

The present invention relates to a straddle type vehicle according to the preamble of independent claim 1. Such a straddle type vehicle, especially called an autobicycle, can be taken from the prior art document EP 1 640 581 A1. Said prior art engine is especially provided with a displacement of about 50 cc and the exhaust gas system is adapted thereto. In particular, said exhaust gas system is provided to ensure sufficient exhaust gas purification without any additional sensor like an oxygen concentration sensor. In said exhaust gas system, the catalyst is arranged within the muffler and a secondary air introduction pipe is connected to the exhaust pipe within the muffler in order to improve connection strength of the related elements.

Exhaust gas discharged due to driving of the engine contains components, which are causes of pollution, such as NOₓ, HC, and CO. Conventionally, there is an exhaust system known, in which a catalyst is provided in an exhaust conduit, exhaust gas passes through the catalyst, and thereby a function of removing those components in exhaust gas is included. For example, Patent Document 1 discloses an exhaust system, in which two catalysts are disposed in an exhaust conduit (referred as "upstream catalyst" and "downstream catalyst" hereinafter), a secondary air supplying conduit is connected to the exhaust conduit between the catalysts, and secondary air is supplied to exhaust gas. Thereby, both the oxidizing effect and the reducing effect function, and NOₓ, HC, and CO are removed.

In the exhaust system in Patent Document 1, an exhaust concentration sensor for detecting an air-fuel ratio is provided at a further downstream part of the downstream catalyst. An air pump mounted on the secondary air supplying conduit is controlled based on a detection value of the exhaust concentration sensor, and thereby secondary air of an amount that allows the catalysts to function appropriately is supplied to exhaust gas.
Patent Document: JP-A-Hei 05-321653

In the exhaust system disclosed in above Patent Document 1, the exhaust concentration sensor is disposed at a further downstream part of the downstream catalyst. However, such an arrangement is difficult in a straddle type vehicle. That is, the downstream catalyst is generally disposed at a part vicinal to a downstream end of the exhaust conduit (referred as a "downstream part" hereinafter). However, since the downstream part of the exhaust conduit is housed in a muffler, it is difficult to mount the exhaust concentration sensor on the downstream part.

About this problem, there can be a method that the exhaust concentration sensor is mounted on the muffler, and an air-fuel ratio of exhaust gas released from the exhaust conduit intro the muffler is detected. However, since the outside air flows into the muffler and is mixed into exhaust gas due to pulsation of exhaust gas, the air-fuel ratio cannot be accurately detected with this method, and an exhaust gas purifying characteristic deteriorates.

Prior art document JP 06-033749 A teaches an internal combustion engine with a secondary air control device and an oxygen sensor arranged between the secondary air supply conduit and the catalyst. Said secondary air control device supplies amount of the secondary air, so that the sensor is operated on the lean side.

Prior art document JP 2005 264895 A teaches an engine for a straddle type vehicle with an exhaust system comprising an exhaust conduit, which is connectable to an engine of a vehicle for discharging of exhaust and a three-way component catalyst, disposed in the exhaust conduit for purifying the exhaust gas. A secondary air-supplying conduit is connected to the exhaust conduit, in a connection position provided more upstream than the catalyst for supplying secondary air to the exhaust gas in the exhaust conduit. There is also a sensor for detecting an air/fuel ratio in the exhaust conduit, wherein the sensor is mounted on a part of the exhaust conduit more downstream than the connecting position of the secondary air-supplying conduit and more upstream than the catalyst.

Prior art document US 5,410,872 A discloses an engine for a vehicle and an exhaust aftertreatment system, comprising a catalytic exhaust aftertreatment device for receiving exhaust gas from the engine and an air source for supplying air to the exhaust stream entering the catalyst. Therein, an exhaust gas downstream oxygen sensor determines the amount of oxygen supplied to the exhaust stream by the air source and controls that it is slightly in excess of the stoichiometric requirement.

It is the object of the present invention to provide a straddle type vehicle having an engine as indicated above, wherein the exhaust gas purifying characteristic is assured and arrangement is facilitated.

This object is solved in an inventive manner by a straddle type vehicle having the features of independent claim 1. Preferred embodiments are laid down in the dependent claims.

According to another preferred embodiment, the exhaust system further comprises a second catalyst disposed at a part in the exhaust conduit more upstream than the connecting position of the secondary air supplying conduit.

Further, preferably the controlling means is configured to control the secondary air amount so that an air-fuel ratio obtained based on the detection value of the sensor becomes the stoichiometric air-fuel ratio.

Still further, preferably the straddle type vehicle is a motorcycle, a four-wheeled buggy, or a snowmobile.

In the following, the present invention is explained in greater detail with respect to several embodiments thereof in conjunction with the accompanying drawings, wherein:
- FIG. 1: is a side view of a motorcycle including an exhaust system according to an embodiment,
- FIG. 2: is a schematic view showing a construction of an intake-exhaust system in the motorcycle,
- FIG. 3: is a plan view of the exhaust system, and
- FIGs. 4: are graphs indicating the relationships between air-fuel ratios at an upstream catalyst and a downstream catalyst and remaining amounts of HC, CO, and NOₓ in exhaust gas after passing through the catalysts.

### Brief Description of Reference Numerals:

1: motorcycle
10: exhaust system
11: exhaust conduit
12: downstream catalyst (first catalyst)
13: upstream catalyst (second catalyst)
14: sensor
15: muffler
16: secondary air supplying conduit
30: engine
31: throttle body
32: fuel supply device
33: air cleaner
34: engine control unit (ECU, controlling means)
35: intake pressure sensor

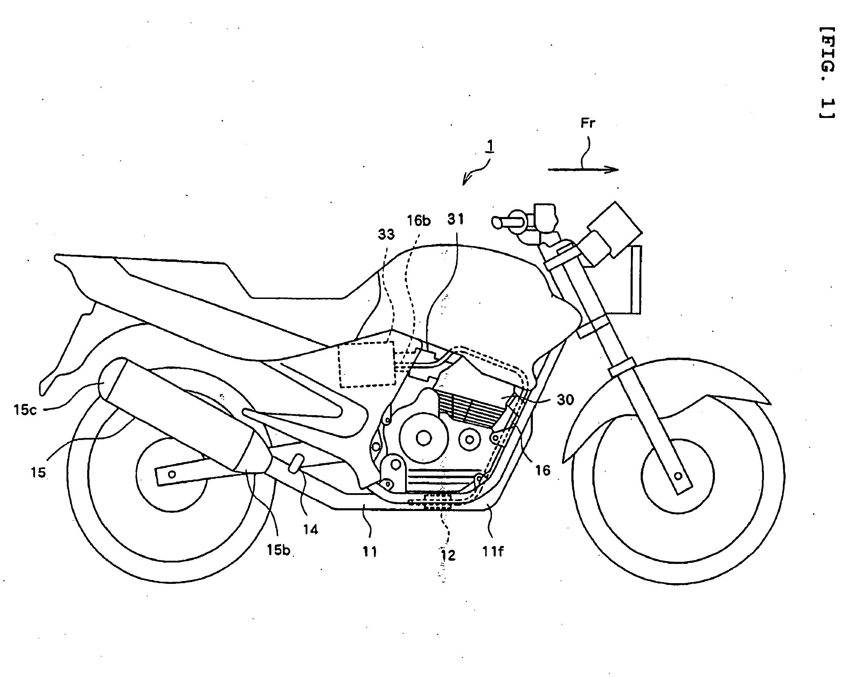

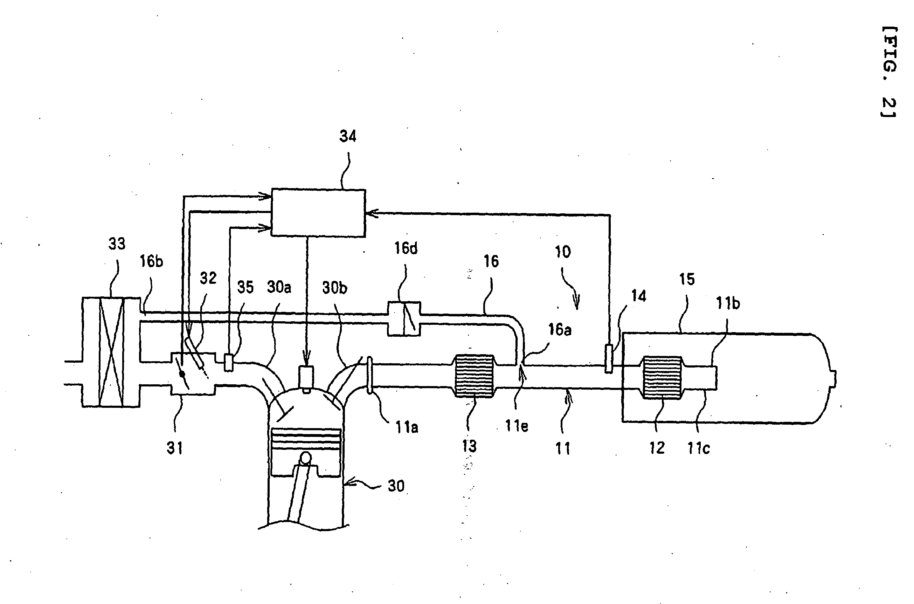

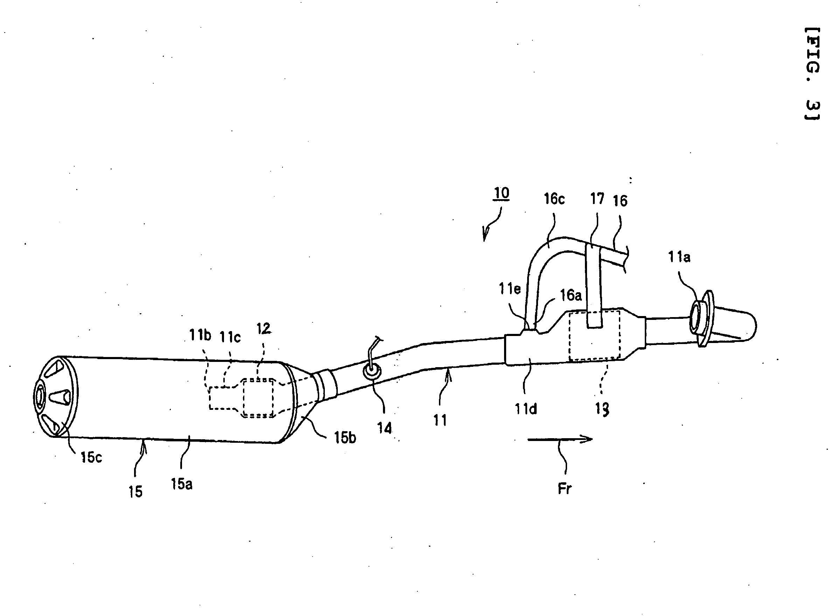

An embodiment of the present teaching will be described hereinafter with reference to drawings. FIG. 1 is a side view of a motorcycle 1 including an exhaust system 10, which is an embodiment according to the present teaching. FIG. 2 is a schematic view showing a construction of an intake-exhaust system including the exhaust system 10. FIG. 3 is a plan view of the exhaust system 10.

The motorcycle 1 includes the exhaust system 10, an engine 30, a fuel supply device 32, and an engine control unit (ECU) 34. The exhaust system 10 includes an exhaust conduit 11, a downstream catalyst (a first catalyst) 12, an upstream catalyst (a second catalyst) 13, a sensor 14, a muffler 15, and a secondary air supplying conduit 16.

As shown in FIG. 2, a throttle body 31 is connected to an intake port 30a of the engine 30. The engine 30 drives by combusting fuel-air mixture supplied from the throttle body 31. The fuel supply device 32 injects fuel into an intake passage of the throttle body 31. The fuel is mixed with air supplied from an air cleaner 33, and becomes fuel-air mixture.

The fuel supply device 32 is an electronic control type fuel injection device including an injector, and injects fuel into the intake passage of the throttle body 31 based on a signal input from the ECU 34. Although the fuel supply device 32 is an electronic control type fuel injection device in this description, the fuel supply device 32 can be a carburetor.

The ECU 34 controls an ignition timing of the engine 30 and a fuel amount injected by the fuel supply device 32 based on a signal input from each type of sensors such as a throttle position sensor (not shown) and an intake pressure sensor 35. In this embodiment, the ECU 34 controls a fuel amount injected by the fuel supply device 32 particularly based on a signal input from the sensor 14. Specifically, the ECU 34 detects if an air-fuel ratio of fuel-air mixture is in the lean state (the state that a fuel ratio is less than the stoichiometric air-fuel ratio (14.7)) or in the rich state (the state that a fuel ratio is larger than the stoichiometric air-fuel ratio), and controls a fuel amount injected by the fuel supply device 32 by feedback control so that the air-fuel ratio becomes the stoichiometric air-fuel ratio. For example, in the case that a detected air-fuel ratio is in the rich state, injection amounts are gradually reduced, and thereby the air-fuel ratio is made closer to the stoichiometric air-fuel ratio. In the case that an air-fuel ratio is in the lean state, injection amounts are gradually increased, and thereby the air-fuel ratio is made closer to the stoichiometric air-fuel ratio.

As shown in FIG. 2, an upstream end 11 a of an exhaust path of the exhaust conduit 11 is connected to an exhaust port 30b of the engine 30. The exhaust conduit 11 extends downward in front of the engine 30 (in the direction indicated by (Fr) in FIG. 1), and thereafter bends rearward at a bending part 11f (see FIG. 1). A downstream part of the exhaust path of the exhaust conduit 11 (referred as an "exhaust conduit downstream part 11c" hereinafter) is housed in the muffler 15 (see FIG. 3). Exhaust gas generated due to driving of the engine 30 flows in the exhaust conduit 11, and thereafter is released from an end 11 b of the exhaust conduit downstream part 11 c into the muffler 15.

The downstream catalyst 12 and the upstream catalyst 13 are three-way catalytic converters for removing, for example, HC, CO, and NOₓ in exhaust gas. Here, the downstream catalyst 12 mainly facilitates oxidization of HC and CO, and the upstream catalyst 13 mainly facilitates reduction of NOₓ.

As shown in FIG. 2 or 3, the downstream catalyst 12 is disposed in an exhaust conduit downstream part 11 c housed in the muffler 15. Thereby, the downstream catalyst 12 is heated to an activation temperature of the catalyst by heat of exhaust gas flowing through the exhaust conduit 11 and heat of exhaust gas that fills the muffler 15 when the engine 30 starts.

The upstream catalyst 13 is disposed in the exhaust conduit 11. The upstream catalyst 13 is disposed in a position more upstream than the downstream catalyst 12 in the exhaust path. The engine 30 is disposed above the upstream catalyst 13 (see FIG. 1). The exhaust conduit 11 includes an upstream catalyst housing part 11 d, of which lateral width is larger than other parts of the exhaust conduit 11. The upstream catalyst 13 is retained in the upstream catalyst housing part 11d (see FIG. 3).

As shown in FIG. 3, the muffler 15 has a cylindrical drum part 15a, a front lid part 15b for blocking a front opening of the drum part 15a, and a rear lid part 15c for blocking a rear opening of the drum part 15a. The muffler 15 guides the exhaust conduit 11 into its inside from the front lid part 15b, and houses the exhaust conduit downstream part 11c. Exhaust gas released from the downstream end 11 b of the exhaust conduit 11 expands in the muffler 15, and is discharged rearward of the vehicle from the muffler 15.

As shown in FIG. 2, the secondary air supplying conduit 16 is connected to the exhaust conduit 11 between the upstream catalyst 13 and the downstream catalyst 12, and supplies secondary air to exhaust gas flowing toward the downstream catalyst 12 by pulsation of exhaust gas. More specifically, as shown in FIG. 3, an introduction opening 11e is formed on a sidewall of the upstream catalyst housing part 11d in a position more downstream than the upstream catalyst 13. An end 16a of the secondary air supplying conduit 16 is connected to the introduction opening 11e. The secondary air supplying conduit 16 extends in the radial direction of the exhaust conduit 11 from the end 16a, thereafter bends at a bending part 16c and extends forward of the vehicle traveling direction. Thereafter, as shown in FIG. 1, the secondary air supplying conduit 16 bends upward, and another end 16b is connected to the air cleaner 33 disposed in the rear part above the engine 30. As shown in FIG. 3, a supporting member 17 is attached to a part in front of the bending part 16c (an upstream part of a flowing path of secondary air) and the upstream catalyst housing part 11 d. The supporting member 17 supports the secondary air supplying conduit 16.

A reed valve 16d is provided in a midway part of the secondary air supplying conduit 16 (see FIG. 2). The reed valve 16d allows secondary air to flow into the exhaust conduit 11, but restricts to flow in the opposite direction. An amount of secondary air flowing into the exhaust conduit 11 due to pulsation of the exhaust gas is determined corresponding to a construction of the secondary air supplying conduit 16 such as its diameter and length. An amount of the secondary air supplied by the secondary air supplying conduit 16 will be described in detail in the following.

The sensor 14 is a sensor for detecting an air-fuel ratio of exhaust gas. The sensor 14 is, for example, an oxygen sensor, in which a voltage value of an output signal is switched across the stoichiometric air-fuel ratio as the boundary. The sensor 14 outputs a high-voltage rich signal to the ECU 34 in the rich state, and outputs a low-voltage lean signal in the lean state. Although the sensor 14 is an oxygen sensor in this description, the sensor 14 can be a linear oxygen sensor, in which a voltage value of an output signal changes corresponding to an oxygen concentration of exhaust gas, an exhaust gas sensor for detecting a concentration of a particular component in exhaust gas such as NOₓ, and so forth.

As shown in FIG. 3, the sensor 14 is mounted on the exhaust conduit 11 outside the muffler 15. The front lid part 15b of the muffler 15 is positioned in the rear of the sensor 14 in the vehicle traveling direction. As shown in FIG. 2, a mounted position of the sensor 14 is more downstream than the introduction opening 11e of the secondary air supplying conduit 16, and more upstream than the downstream catalyst 12. Thereby, the ECU 34 can detect if exhaust gas supplied with secondary air and flowing into the downstream catalyst 12 is in the lean state or in the rich state based on a signal input from the sensor 14. Here, the sensor 14 is particularly mounted in the position closer to the downstream catalyst 12 than the middle part between the downstream catalyst 12 and the secondary air supplying conduit 16.

Now, descriptions will be made about an amount of secondary air supplied to exhaust gas from the secondary air supplying conduit 16. The secondary air supplying conduit 16 supplies secondary air so that an air-fuel ratio at the downstream catalyst 12 (referred as a "downstream air-fuel ratio" hereinafter) becomes the stoichiometric air-fuel ratio when an air-fuel ratio of exhaust gas at the upstream catalyst 13 (referred as an "upstream air-fuel ratio" hereinafter) is a prescribed air-fuel ratio richer than the stoichiometric air-fuel ratio (referred as a "high output air-fuel ratio" hereinafter, for example, 13.7).

That is, the secondary air supplying conduit 16 supplies secondary air of an amount (referred as an "appropriate supply amount" hereinafter) such that a downstream air-fuel ratio is higher (leaner) than an upstream air-fuel ratio by a preset value (referred as a "prescribed air-fuel ratio" hereinafter, for example, 1) in an upstream part of the downstream catalyst 12. Thereby, when a downstream air-fuel ratio is the stoichiometric air-fuel ratio by control of the ECU 34, an upstream air-fuel ratio is a high output air-fuel ratio, which is lower (richer) than the stoichiometric air-fuel ratio by the prescribed air-fuel ratio difference. As a result, if a downstream air-fuel ratio is the stoichiometric air-fuel ratio, the engine 30 is driven in the rich state, and an acceleration characteristic of the vehicle is assured. Since the air-fuel ratio is lower than the stoichiometric air-fuel ratio, reduction of NOₓ is mainly made in the upstream catalyst 13, and oxidization of CO and HC is mainly made in the downstream catalyst.

An amount of secondary air supplied to exhaust gas from the secondary air supplying conduit 16 is determined corresponding to a construction of the secondary air supplying conduit 16 such as its diameter and length. Here, the construction of the secondary air supplying conduit 16 is set in a manner such that the appropriate supply amount of secondary air flows into exhaust gas from the secondary air supplying conduit 16.

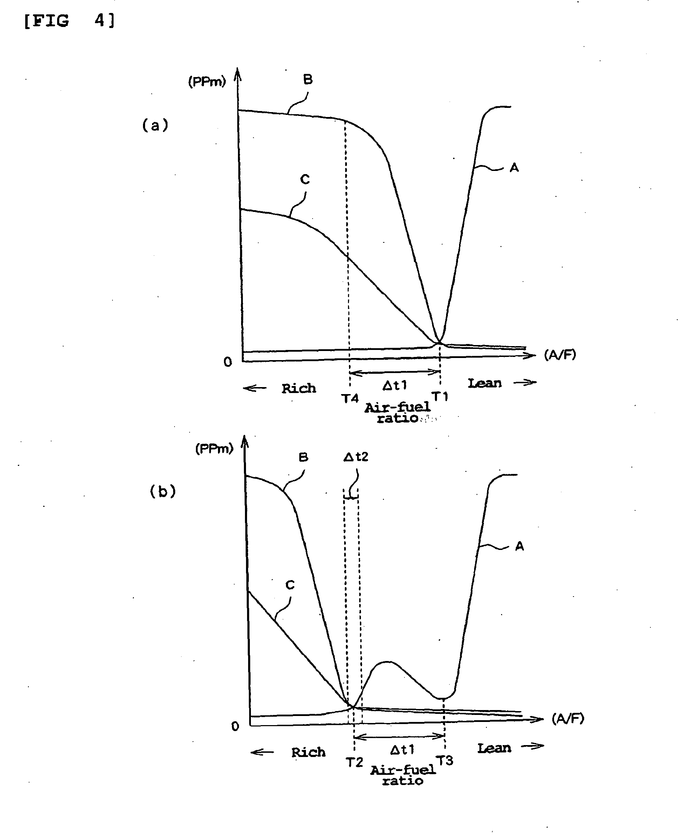

Now, descriptions will be made about an air-fuel ratio at each of the catalysts and remaining amounts of target components (HC, CO, and NOₓ) in exhaust gas after passing through the catalysts. FIG. 4(a) is a graph indicating the relationship between the remaining amounts of the target components included in the exhaust gas after passing through the upstream catalyst 13 and the upstream air-fuel ratio. FIG. 4(b) is a graph indicating the relationship between the remaining amounts of target components included in the exhaust gas after passing through the downstream catalyst 12 and the downstream air-fuel ratio. In the graphs, the horizontal axes show the air-fuel ratios, and the vertical axes show the remaining amount of each component in the exhaust gas. In the graphs, curve (A) indicates the remaining amount of NOₓ, curve (B) indicates the remaining amount of HC, and curve (C) indicates the remaining amount of CO.

FIG. 4(a) shows that a large part of NOₓ is removed in the rich state that an air-fuel ratio is lower (richer) than the stoichiometric air-fuel ratio (T1). Also, FIG. 4(a) shows that the remaining amount of NOₓ is large in the lean state that an air-fuel ratio is higher (leaner) than the stoichiometric air-fuel ratio (T1). On the other hand, FIG. 4(a) shows that the remaining amounts of HC and CO are large in the rich state, but large amounts are removed in the lean state.

FIG. 4(b) shows that large amounts of HC and CO remain in the rich state that an air-fuel ratio is lower (richer) than the stoichiometric air-fuel ratio (T2), but large parts are removed in the lean state. On the other hand, FIG. 4(b) shows that a large part of NOₓ is removed in the lean state, but a part of NOₓ is not removed in a range between the stoichiometric air-fuel ratio (T2) and an air-fuel ratio (T3), at which the air-fuel ratio is higher than the stoichiometric air-fuel ratio (T2) by a prescribed air-fuel ratio difference Δt1. Such a situation occurs because NOₓ changes into ammonia by reduction, and thereafter the ammonia is oxidized at the downstream catalyst 12 and becomes NOₓ again. Also, FIG. 4(b) shows that NOₓ not removed at the upstream catalyst 13 is not removed at the downstream catalyst 12 either, and a large part of NOₓ remains in the exhaust gas in a range that an air-fuel ratio is further higher (leaner) than the air-fuel ratio (T3).

As described above, when a downstream air-fuel ratio is the stoichiometric air-fuel ratio (T2), an upstream air-fuel ratio is a high output air-fuel ratio (T4), which is lower (richer) than the stoichiometric air-fuel ratio (T1) by the prescribed air-fuel ratio difference Δt1. Thereby, although CO and HC remain at the upstream catalyst 13, a large part of NOₓ is removed by reduction.

As described above, the ECU 34 detects if a downstream air-fuel ratio is in the rich state or in the lean state based on a signal input from the sensor 14. Thereby, the ECU 34 controls a fuel amount injected by the fuel supply device 32 so that the air-fuel ratio becomes the stoichiometric air-fuel ratio. Therefore, the downstream air-fuel ratio changes in a narrow range including the stoichiometric air-fuel ratio (T2) in FIG. 4(b) (the range Δt2 indicated in the graph). As a result, CO and HC remaining after passing the upstream catalyst 13 are oxidized and removed.

In the exhaust system 10 described in the foregoing, since the sensor 14 is mounted on the exhaust conduit 11 in a part more upstream than the downstream catalyst 12, the muffler 15 is prevented from disturbing the mounting of the sensor 14, and the arrangements of the muffler and the sensor are facilitated.

The present teaching is not limited to the exhaust system 10 and the motorcycle 10 described in the foregoing, but is available for various changes. For example, in the above descriptions, the ECU 34 controls a fuel amount injected by the fuel supply device 32, and thereby the air-fuel ratio at the downstream catalyst 12 is made the stoichiometric air-fuel ratio. However, providing an air pump in the secondary air supplying conduit 16, the ECU 34 may control the air pump so that the air-fuel ratio at the downstream catalyst 12 becomes the stoichiometric air-fuel ratio.

The exhaust system according to the present embodiment is an exhaust system, including: an exhaust conduit, through which exhaust gas discharged from an engine flows; a first catalyst disposed in the exhaust conduit for purifying exhaust gas; a sensor for detecting an air-fuel ratio in the exhaust conduit; and a secondary air supplying conduit connected to the exhaust conduit in a connecting position provided more upstream than the first catalyst for supplying secondary air to exhaust gas in the exhaust conduit. Further, the sensor is mounted on a part of the exhaust conduit more downstream than the connecting position of the secondary air supplying conduit and more upstream than the first catalyst. With the present invention, in the case that the first catalyst is housed in the muffler, the muffler is prevented from disturbing the mounting of the sensor since the sensor is in a part more upstream than the first catalyst. Also, since the sensor is mounted on the exhaust conduit, accurate detection of an air-fuel ratio can be realized, and the exhaust gas purification characteristic is assured.

In one preferred aspect of the present embodiment, the exhaust system further includes the muffler housing the first catalyst and the part of the exhaust conduit more downstream than the first catalyst. The sensor is mounted on the exhaust conduit outside the muffler. With such a construction, in the case that the first catalyst is housed in the muffler, the muffler is prevented from disturbing the mounting of the sensor.

In a further preferred aspect of the present embodiment, the exhaust system further includes a second catalyst disposed in the exhaust conduit in a position more upstream than the connecting position of the secondary air supplying conduit. With this aspect, each of the catalysts can be made function with putting importance on either one of oxidization or reduction. For example, the first catalyst can be mainly used for oxidization, and the second catalyst can be mainly used for reduction.

The straddle type vehicle according to the present embodiment includes the exhaust system. Here, the straddle type vehicles are motorcycles (including scooters), four-wheeled buggies, snowmobiles, and so forth, for example. According to the present embodiment, in the case that the first catalyst is housed in the muffler, the muffler is prevented from disturbing the mounting of the sensor. Since the sensor is mounted on the exhaust conduit, accurate detection of an air-fuel ratio can be realized, and thereby the exhaust gas purifying characteristic is assured.

In one preferred aspect of the straddle type vehicle according to the present embodiment, the exhaust system includes a controlling means for controlling an injection amount of fuel supplied to the engine based on a detection value of the sensor. In this preferred aspect, an injection amount of fuel can be controlled so that an air-fuel ratio of exhaust gas becomes an air-fuel ratio such that the catalysts effectively function.

In this preferred aspect, the controlling means may control an injection amount of fuel so that an air-fuel ratio obtained based on a detection value of the sensor becomes the stoichiometric air-fuel ratio. In this way, an air-fuel ratio of exhaust gas flowing into the first catalyst is made the stoichiometric air-fuel ratio, and thereby an air-fuel ratio of the second catalyst can be made lower (richer). As a result, an acceleration characteristic of the engine can be improved, and effective reduction at the second catalyst can be realized.

The description above discloses, according to a first preferred aspect, an exhaust system, comprising: an exhaust conduit, through which exhaust gas discharged from an engine flows; a first catalyst disposed in the exhaust conduit for purifying exhaust gas; a sensor for detecting an air-fuel ratio in the exhaust conduit; and a secondary air supplying conduit connected to the exhaust conduit in a connecting position provided more upstream than the first catalyst for supplying secondary air to exhaust gas in the exhaust conduit, wherein the sensor is mounted on a part of the exhaust conduit more downstream than the connecting position of the secondary air supplying conduit and more upstream than the first catalyst.

Further, according to a second preferred aspect, the exhaust system further comprises a muffler housing the first catalyst and a part of the exhaust conduit more downstream than the first catalyst, wherein the sensor is mounted on the exhaust conduit outside the muffler.

Further, according to a third preferred aspect, the exhaust system further comprises a second catalyst disposed at a part in the exhaust conduit more upstream than the connecting position of the secondary air supplying conduit.

The description further discloses, according to a fourth preferred aspect, a straddle type vehicle comprising the exhaust system according to the first to third embodiments.

Further, according to a fifth preferred aspect, the straddle type vehicle further comprises controlling means for controlling an injection amount of fuel supplied to the engine based on a detection value of the sensor.

Further, according to a sixth preferred aspect, the controlling means controls an injection amount of fuel so that an air-fuel ratio obtained based on the detection value of the sensor becomes the stoichiometric air-fuel ratio.

According to a particularly preferred aspect, in order to provide an exhaust system, in which an exhaust gas purifying characteristic is assured and arrangement is facilitated, there is disclosed an exhaust system 10 which includes an exhaust conduit 11, a downstream catalyst 12 disposed in the exhaust conduit 11 for purifying exhaust gas, a sensor 14 for detecting an air-fuel ratio in the exhaust conduit 11, and a secondary air supplying conduit 16 connected to the exhaust conduit 11 in a connecting position provided in a part more upstream than the downstream catalyst 12 for supplying secondary air to exhaust gas in the exhaust conduit 11. Therein, the sensor 14 is mounted on the exhaust conduit 11 in a part more downstream than the connecting position of the secondary air supplying conduit 16 and more upstream than the downstream catalyst 12.

## Claims

1. Straddle type vehicle having an engine, and an exhaust system comprising:
an exhaust conduit (11), connected to the engine of the vehicle for discharging of exhaust;
a first catalyst (12) disposed in the exhaust conduit (11) for purifying the exhaust gas, wherein the first catalyst (12) is disposed in an exhaust conduit downstream part (11c) housed in a muffler (15) more downstream than a second catalyst (13) a secondary air supplying conduit (16) connected to the exhaust conduit (11) in a connecting position provided more upstream than the first catalyst (12) for supplying secondary air to the exhaust gas in the exhaust conduit (11),
**characterized by**
a sensor (14) mounted on a part of the exhaust conduit (11) more downstream than the connecting position of the secondary air supplying conduit (16) and more upstream than the first catalyst (12) for detecting an air-fuel ratio in the exhaust conduit (11), wherein the sensor (14) is mounted on the exhaust conduit (11) outside the muffler (15), and
controlling means (34) for controlling an injection amount of fuel supplied to the engine and/or a secondary air amount supplied by the secondary air supplying conduit (16) based on a detection value of the sensor (14), wherein the controlling means (34) is configured to control an injection amount of fuel so that an air-fuel ratio obtained based on the detection value of the sensor (14) becomes the stoichiometric air-fuel ratio.

2. Straddle type vehicle according to claim 1, **characterized in that** the second catalyst (13) is disposed at a part in the exhaust conduit (11) more upstream than the connecting position of the secondary air supplying conduit (16).

3. Straddle type vehicle according to claim 1 or 2, **characterized in that** the controlling means (34) is configured to control the secondary air amount so that an air-fuel ratio obtained based on the detection value of the sensor (14) becomes the stoichiometric air-fuel ratio.

4. Straddle type vehicle according to one of the claims 1 to 3, **characterized in that** the straddle type vehicle is a motorcycle, a four-wheeled buggy, or a snowmobile.

## Patentansprüche

1. Fahrzeug vom Spreitzsitz- Typ, das eine Brennkraftmaschine und ein Abgassystem hat, aufweisend:
eine Abgasleitung (11), verbunden mit der Brennkraftmaschine des Fahrzeuges zum Abgeben von Abgas;
einen ersten Katalysator (12), angeordnet in der ersten Abgasleitung (11) zum Reinigen des Abgases, wobei der erste Katalysator (12) in einem stromabwärtigen Teil der Abgasleitung (11c), untergebracht in einem Schalldämpfer (15) weiter stromab als der zweite Katalysator (13), angeordnet ist,
eine Sekundärluft- Zuführungsleitung (16), verbunden mit der Abgasleitung (11) in einer Verbindungsposition, vorgesehen weiter stromauf als der erste Katalysator (12) zum Zuführen von Sekundärluft zu dem Abgas in der Abgasleitung (11),
**gekennzeichnet durch**
einen Sensor (14), montiert an einem Teil der Abgasleitung (11) weiter stromab als die Verbindungsposition der Sekundärluft- Zuführungsleitung (16) und weiter stromauf als der erste Katalysator (12) zum Erfassen eines Luft- Kraftstoff- Verhältnisses in der Abgasleitung (11), wobei der Sensor (14) an der Abgasleitung (11) außerhalb des Schalldämpfers (15) montiert ist, und
eine Steuerungseinrichtung (34) zum Steuern einer Kraftstoffeinspritzmenge, zugeführt zu der Brennkraftmaschine und / oder einer Sekundärluftmenge, zugeführt durch die Sekundärluft- Zuführungsleitung (16) auf der Grundlage eines Erfassungswertes des Sensors (14), wobei die Steuerungseinrichtung (34) konfiguriert ist, eine Kraftstoffeinspritzmenge so zu steuern, dass ein Luft- Kraftstoff- Verhältnis, erhalten auf der Grundlage des Erfassungswertes des Sensors (14), das stöchiometrische Luft- Kraftstoff- Verhältnis wird.

2. Fahrzeug vom Spreitzsitz- Typ nach Anspruch 1, **dadurch gekennzeichnet, dass** der zweite Katalysator (13) an einem Teil in der Abgasleitung (11) weiter stromauf als die Verbindungsposition der Sekundärluft- Zuführungsleitung (16) angeordnet ist.

3. Fahrzeug vom Spreitzsitz- Typ nach Anspruch 1 oder 2, **dadurch gekennzeichnet, dass** die Steuerungseinrichtung (34) konfiguriert ist, die Sekundärluftmenge so zu steuern, dass ein Luft- Kraftstoff- Verhältnis, erhalten auf der Grundlage des Erfassungswertes des Sensors (14) das stöchiometrische Luft- Kraftstoff- Verhältnis wird.

4. Fahrzeug vom Spreitzsitz- Typ nach einem der Ansprüche 1 bis 3, **dadurch gekennzeichnet, dass** das Fahrzeug vom Spreitzsitz- Typ ein Motorrad, ein vierrädriger Buggy, oder ein Schneemobil ist.

## Revendications

1. Véhicule de type à enfourcher ayant un moteur et un système d'échappement, comprenant :
un conduit d'échappement (11) raccordé au moteur du véhicule pour évacuer l'échappement ;
un premier catalyseur (12) disposé dans le conduit d'échappement (11) pour purifier les gaz d'échappement, dans lequel le premier catalyseur (12) est disposé dans une partie en aval (11c) du conduit d'échappement logé dans un silencieux (15) plus en aval qu'un second catalyseur (13), un conduit d'alimentation d'air secondaire (16) raccordé au conduit d'échappement (11) dans une position de raccordement prévue plus en amont que le premier catalyseur (12) pour alimenter l'air secondaire aux gaz d'échappement dans le conduit d'échappement (11),
**caractérisé par** :
un capteur (14) monté sur une partie du conduit d'échappement (11) plus en aval que la position de raccordement du conduit d'alimentation d'air secondaire (16) et plus en amont que le premier catalyseur (12) pour détecter un rapport d'air - carburant dans le conduit d'échappement (11), dans lequel le capteur (14) est monté sur le conduit d'échappement (11) à l'extérieur du silencieux (15), et
des moyens de commande (34) pour commander une quantité d'injection de carburant alimenté au moteur et/ou une quantité d'air secondaire alimenté par le conduit d'alimentation d'air secondaire (16) en fonction d'une valeur de détection du capteur (14), dans lequel les moyens de commande (34) sont configurés pour commander une quantité d'injection de carburant de sorte qu'un rapport air - carburant obtenu en fonction de la valeur de détection du capteur (14) devient le rapport air - carburant stoechiométrique.

2. Véhicule de type à enfourcher selon la revendication 1, **caractérisé en ce que** le second catalyseur (13) est disposé au niveau d'une partie dans le conduit d'échappement (11) plus en amont que la position de raccordement du conduit d'alimentation d'air secondaire (16).

3. Véhicule de type à enfourcher selon la revendication 1 ou 2, **caractérisé en ce que** les moyens de commande (34) sont configurés pour commander la quantité d'air secondaire de sorte qu'un rapport air - carburant obtenu en fonction de la valeur de détection du capteur (14) devienne le rapport air - carburant stoechiométrique.

4. Véhicule de type à enfourcher selon l'une quelconque des revendications 1 à 3, **caractérisé en ce que** le véhicule de type à enfourcher est une motocycle, un buggy à quatre roues ou une motoneige.
